# EUROPEAN PATENT APPLICATION

(11) **EP 4 803 345 A1**
(43) Date of publication of application: **09.09.2026**
(21) Application number: 26162119.7
(22) Date of filing: 03.03.2026
(51) Int. Cl.: B60L 1/00, B60L 3/12, B60L 58/12, B60L 58/16, H02J 7/94

(54) **CURRENT ALLOCATION SYSTEM AND METHOD FOR UTILITY VEHICLES**

(30) Priority: 03.03.2025 US 202563766156 P
(71) Applicant: Manitou Equipment America, LLC, West Bend, WI 53095 (US)
(72) Inventor: BOUTIN, Laurent, 44150 ANCENIS (FR); KOLLOJU, Kashi, West Bend, 53095 (US); LARSCHEIDT, Nathaniel, West Bend, 53095 (US); RANCINANGUE, Benjamin, 44150 ANCENIS (FR)
(74) Representative: Loyer & Abello

(57) **Abstract**

Examples provide an electric utility vehicle including at least two inverters, a battery to provide power to the at least two inverters, and a controller designed to determine at least one operating condition associated with the battery, determine a threshold current draw for the at least two inverters based on the at least one operating condition, compute a spare current as a difference between a total active current draw of the at least two inverters and a threshold current draw, compute respective current allocations of the spare current for the at least two inverters based on the at least one operating condition, and control the at least two inverters to operate according to the respective current allocations.

## Description

### CROSS-REFERENCE TO RELATED APPLICATIONS

This Application claims priority to U.S. Provisional Patent Application No. 63/766,156, filed on March 3, 2025, entitled "CURRENT ALLOCATION SYSTEM AND METHOD FOR UTILITY VEHICLES," the entire disclosure of which is incorporated herein by reference.

### FIELD OF THE INVENTION

The present disclosure relates to electric utility vehicles, and more specifically, the current consumption limits of various electric utility vehicle components.

### BACKGROUND

Electric utility vehicles can include inverters for the hydroelectric work groups, inverters for the traction system, and embedded electronics. In conventional electric utility vehicles, battery management systems deliver current from the battery based only on active demand from the various electrical components.

### SUMMARY

As described above, conventional battery management systems in utility vehicles allocate current based only on active demand, and do not factor in battery warranty limits, battery state of health, state of charge, temperature, or other operating conditions. These conventional approaches can diminish battery life, battery integrity, user experience, and overall vehicle performance.

Thus, there is a need to intelligently limit battery current consumption based on evolving factors of a battery management system. One example provides an electric utility vehicle including at least two inverters arranged to provide power to respective motors, a battery arranged to provide power to the at least two inverters, and a controller communicatively connected to the battery and the at least two inverters. The controller is designed to determine at least one operating condition associated with the battery. The at least one operating condition includes a total active current draw of the at least two inverters. The controller is further designed to determine a threshold current draw for the at least two inverters based on the at least one operating condition, compute a spare current as a difference between the total active current draw and a threshold current draw, compute respective current allocations of the spare current for the at least two inverters based on the at least one operating condition, and control the at least two inverters to operate according to respective current limits corresponding to the respective current allocations.

In some aspects, the controller is further designed to determine, based on the at least one operating condition, that at least a first inverter of the at least two inverters is not in active use and maximize allocation of the spare current to others of the at least two inverters.

In some aspects, the at least one operating condition further includes a state of charge (SOC) of the battery, a state of health (SOH) of the battery, a temperature of the battery, a nominal maximum current draw rated for the battery, a reserve current for embedded electronics, respective current draws from each inverter, respective current outputs from each inverter, an operator selection to prioritize allocation to a selected inverter of the at least two inverters, an operator-selected maximum power output, or a combination thereof.

In some aspects, the current allocations are computed based on a static ratio in which the spare current is allocated equally to the at least two inverters.

In some aspects, the at least two inverters include at least one hydraulic system inverter and at least one traction control system inverter.

In some aspects, the controller is further designed to compute a current allocation ratio indicative of a ratio of the spare current to be allocated to the at least one hydraulic system inverter relative to the at least one traction control system inverter and compute the respective current allocations according to the spare current and the current allocation ratio.

In some aspects, the controller is designed to compute the current allocation ratio responsive to receiving a request to power the at least two inverters.

In some aspects, the controller is designed to compute the current allocation ratio as part of a proportional-integral-derivative loop.

In some aspects, the current allocation ratio is a dynamic ratio computed based on a ratio of actual current drawn by a first inverter of the at least two inverters relative to a second inverter of the at least two inverters, a rate of change of current drawn by the first inverter relative to the second inverter, a derate status of the first inverter and/or the second inverter computed based on the at least one operating condition, or a combination thereof.

In some aspects, the controller is further designed to store a set of previous current draws from the at least two inverters and a set of previous respective current allocations of the at least two inverters, predict rates of change of current drawn by the at least two inverters based on the set of previous current draws from the at least two inverters, the set of previous respective current allocations of the at least two inverters, and respective active current draws of the at least two inverters.

In some aspects, the at least two inverters include at least one hydraulic system inverter and at least two traction control system inverters.

In some aspects, the controller is further designed to estimate a warranty exposure of the battery based at least in part on the at least one operating condition and compute the respective current allocations of the spare current for the at least two inverters based on the warranty exposure.

In some aspects, the controller is further designed to compute the respective current allocations based on a current allocation protocol selected by an operator.

In some aspects, the current allocation protocol is one of a static allocation protocol in which the spare current is allocated equally to the at least two inverters or a dynamic allocation protocol in which the spare current is allocated based on a ratio of actual current drawn by a first inverter of the at least two inverters relative to a second inverter of the at least two inverters.

Another example provides a battery management system including a memory storing instructions, and a controller designed to execute the instructions to cause the battery management system to determine at least one operating condition associated with a battery. The at least one operating condition includes a total active current draw of at least two inverters connected to the battery. The instructions further cause the battery management system to determine a threshold current draw for the at least two inverters based on the at least one operating condition, compute a spare current as a difference between the total active current draw and the threshold current draw, compute respective current allocations of the spare current for the at least two inverters based on the at least one operating condition, and output at least one command imposing current limits on the at least two inverters based on the respective current allocations.

In some aspects, the instructions further cause the battery management system to determine, based on the at least one operating condition, that at least a first inverter of the at least two inverters is not in active use and maximize allocation of the spare current to others of the at least two inverters.

In some aspects, the instructions further cause the battery management system to compute a current allocation ratio indicative of a ratio of the spare current to be allocated to a first inverter relative to a second inverter and compute the respective current allocations according to the spare current and the current allocation ratio.

In some aspects, the current allocation ratio is a dynamic ratio computed based on a ratio of actual current drawn by the first inverter relative to the second inverter, a rate of change of current drawn by the first inverter relative to the second inverter, a derate status of the at least two inverters computed based on the at least one operating condition, or a combination thereof.

Another example provides a method including determining at least one operating condition associated with a battery of an electric utility vehicle. The at least one operating condition includes a total active current draw of at least two inverters connected to the battery. The method further includes determining a threshold current draw for the at least two inverters based on the at least one operating condition, computing a spare current as a difference between the total active current draw and the threshold current draw, computing respective current allocations of the spare current for the at least two inverters based on the at least one operating condition, and controlling the at least two inverters to operate according to the respective current allocations

In some aspects, the at least two inverters include at least one hydraulic system inverter and at least one traction control system inverter, and the method further includes computing a current allocation ratio indicative of a ratio of the spare current to be allocated to at least one hydraulic system inverter relative to the at least one traction control system inverter and computing the respective current allocations according to the spare current and the current allocation ratio.

### DESCRIPTION OF THE DRAWINGS

FIG. 1 illustrates an electric utility vehicle, according to some examples;
FIG. 2 is a block diagram of various components of the electric utility vehicle of FIG. 1, according to some examples;
FIG. 3 illustrates a flow diagram of a current allocation method, according to some examples;
FIG. 4 illustrates a process for enforcing current limits in an electric utility vehicle, according to some examples;
FIG. 5 is a current limit diagram for components of the electric utility vehicle of FIG. 1 under a static current allocation protocol, according to some examples;
FIG. 6 is a current limit diagram for components of the electric utility vehicle of FIG. 1 under a dynamic current allocation protocol, according to some examples;
FIG. 7 is a current limit diagram for components of the electric utility vehicle of FIG. 1 under a dynamic current allocation protocol, according to some examples; and
FIG. 8 is a current limit diagram for components of the electric utility vehicle of FIG. 1 under a dynamic current allocation protocol, according to some examples.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to the embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize that the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the attached drawings. The invention is capable of other embodiments and of being practiced or of being carried out in various ways. Also, it is to be understood that the phraseology and terminology used herein are for the purpose of description and should not be regarded as limiting. For example, the use of "including," "comprising," or "having" and variations thereof herein is meant to encompass the items listed thereafter and equivalents thereof as well as additional items.

As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical, electrical, mechanical, or communicative connections or couplings.

As used herein, unless otherwise specified or limited, "at least one of A, B, and C," and similar other phrases, are meant to indicate A, or B, or C, or any combination of A, B, and/or C. As such, this phrase, and similar other phrases can include single or multiple instances of A, B, and/or C, and, in the case that any of A, B, and/or C indicates a category of elements, single or multiple instances of any of the elements of the categories A, B, and/or C.

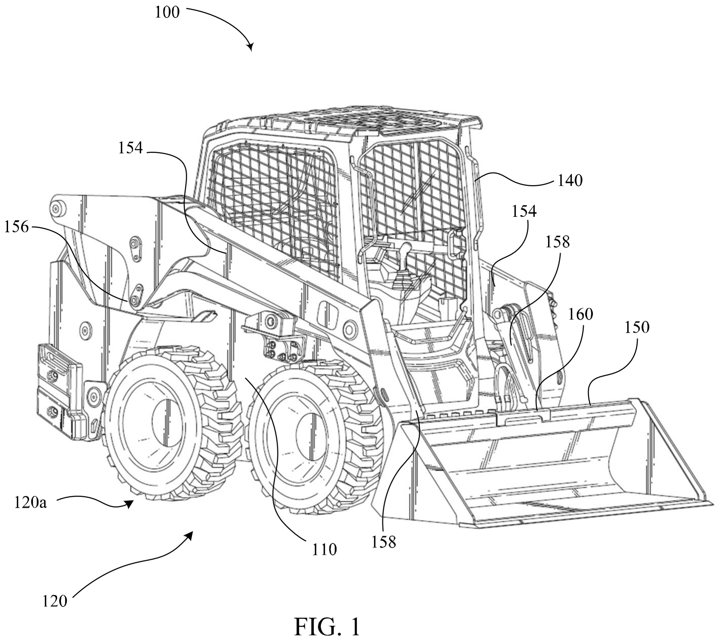

FIG. 1 illustrates an electric utility vehicle, according to some examples. The electric utility vehicle 100 can include, among other things, a chassis 110 that defines the body of the vehicle 100, a ground engaging traction system 120, an operator station 140, and at least one utility attachment 150. The ground engaging traction system 120 may be formed as tracks or wheels. The ground engaging traction system 120 can be configured to drive the electric utility vehicle 100 in a forward, reverse, or turning direction in response to a command received from an operator at the operator station 140. In some examples, the ground engaging traction system includes a right-side traction system 120a and a left-side traction system 120b positioned on opposite sides of the chassis 110.

The utility attachment 150 can be configured to perform a work operation in response to a command received from the operator station 140. In the example of FIG. 1, the utility attachment 150 includes one or more lift arms 154 that translate upward and downward with respect to the chassis 110 via activation of one or more lift cylinders 156, and an attachment plate 160 that can be tilted upward and downward with respect to the lift arm 154 via activation of one or more tilt cylinders 158. However, in other examples, the utility attachment can alternatively or additionally include an auger, backhoe, bale mover, blade, boom lift, breaker, broom, bucket, chipper, concrete tool, grader blade, grappler, land leveler, log splitter, material unroller, mower, mulcher, pallet fork, rake, rock wheel, roto tiller, scarifier, scraper, silage defacer, snow blower, snow push, sod unroller, spreader, stump grinder, stump remover, tree handler, trencher, or the like. FIG. 1 generally illustrates the electric utility vehicle 100 as a loader. However, the electric utility vehicle 100 may be embodied as a different electric utility vehicle, such as a telehandler or a forklift.

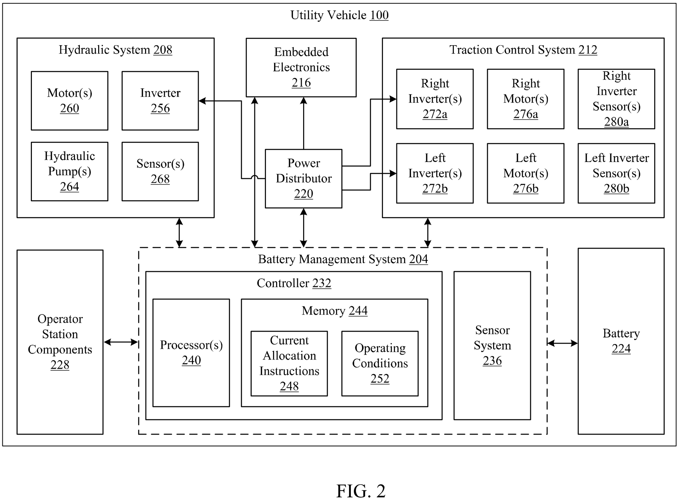

FIG. 2 is a block diagram of various components of the electric utility vehicle 100, according to some examples. In some examples, components of the electric utility vehicle 100 shown in FIG. 2 together form a power distribution system of the electric utility vehicle 100. In the example of FIG. 2, the electric utility vehicle 100 can include a controller 232 electrically and communicatively connected to a hydraulic system 208, a traction control system 212, embedded electronics 216, a power distributor 220, a battery 224 (e.g., at least one battery 224), operator station components 228, and a sensor system 236. In some examples, the controller 232 and/or the sensor system 236 are included as part of a battery management system (BMS) 204. In other examples, the controller 232 and/or the sensor system 236 are separate from the BMS 204. In other examples, the controller 232 and/or sensor system 236 are implemented in a distributed manner in the vehicle 100, such that, for example, operations performed by the controller 232 and/or the sensor system 236 are performed at least in part by the BMS 204 and at least in part outside the BMS 204.

The controller 232 can include a processor 240 (e.g., at least one processor 240) and a memory 244. The memory 244 may include software instructions 248 for performing a current allocation method described herein. The memory 244 may also store operating conditions 252 associated with the battery 224, the BMS 204, and/or other components of the vehicle 100. For example, the operating conditions 252 can include a state of charge (SOC) of the battery 224, a state of health (SOH) of the battery 224, a temperature of the battery 224, a nominal maximum current draw rated for the battery 224, reserve current requirements for the embedded electronics 216, a current draw from the hydraulic system 208 or one or more components thereof (e.g., a hydraulic system inverter 256), a current draw from the traction control system 212 or one or more components thereof (e.g., one or more traction control system inverters 272), respective current outputs from one or more components of the hydraulic system 208 and/or the traction control system 212, a requested power draw received via the operator station components 228, and/or the like. Some or all of the operating conditions 252 may be measured using the sensor system 236. In that regard, the sensor system 236 can include one or more current sensors, voltage sensors, temperature sensors, pressure sensors, vibration sensors, moisture sensors, position sensors, proximity sensors, and/or the like.

The processor 240 is adapted to retrieve and execute programming instructions, such as the current allocation instructions 248. Similarly, the processor 240 is adapted to store application data (e.g., software libraries) and retrieve application data from the memory 244. The processor 240 may be provided in the form of one or more of any suitable processing devices or set of processing devices, such as, but not limited to, a microprocessor, a microcontroller-based platform, a suitable integrated circuit, one or more field programmable gate arrays (FPGAs), and/or one or more application-specific integrated circuits (ASICs).

In some aspects, the controller 232 can be communicatively coupled to one or more components of the electric utility vehicle 100 using a controller area network (CAN) bus network or wireless network and protocol. In some forms, the controller 232 may be hard-wired to various components of the electric utility vehicle 100.

In some forms, the processor 240 Error: Reference source not foundmay include multiple processors, the memory 244 Error: Reference source not foundmay include multiple memories, and the controller 232 may include multiple controllers. One or more of the multiple processors may be coupled with one or more of the multiple memories, which may, individually or collectively, be configured to perform various functions described herein. In some examples, the processor Error: Reference source not foundmay be a component of a processing system, which may refer to a system (such as a series) of machines, circuitry (including, for example, one or both of processor circuitry (which may include the processor) and memory circuitry (which may include the memoryError: Reference source not found)), or components, that receives or obtains inputs and processes the inputs to produce, generate, or obtain a set of outputs. The processing system may be configured to perform one or more of the functions described herein. For example, the processor 240 Error: Reference source not foundof the controller 232 or a processing system including the processor Error: Reference source not foundof the controller 232 and/or a processor of the hydraulic system 208, traction control system 212, and/or embedded electronics 216 may be configured to, or be configurable to, perform one or more of the functions described herein. Further, as described herein, being "configured to," being "configurable to," and being "operable to" may be used interchangeably and may be associated with a capability, when executing code (e.g., processor-executable code) stored in the memory Error: Reference source not foundor otherwise, to perform one or more of the functions described herein.

The terms "non-transitory computer-readable medium" and "tangible computer-readable medium" should be understood to include a single medium or multiple media, such as a centralized or distributed database, and/or associated caches and servers that store one or more sets of instructions. The terms "non-transitory computer-readable medium" and "tangible computer-readable medium" also include any tangible medium that can store, encode, or carry a set of instructions for execution by the controller 232 to perform any one or more of the methods or operations disclosed herein. As used herein, the term "tangible computer-readable medium" includes any type of computer-readable storage device and/or storage disk and excludes propagating signals. As used herein, the terms "tangible computer-readable medium" and "tangible machine-readable medium" can be used interchangeably.

The hydraulic system 208 may include an inverter 256 arranged to power at least one electric motor 260 of the hydraulic system 208. The inverter 256 may be herein referred to as a hydraulic system inverter 256. The hydraulic system inverter 256 may include, for example, a three-phase variable speed inverter. The hydraulic system motor 260 can be operatively connected to a hydraulic pump 264. The hydraulic pump 264 can activate a hydraulically powered utility attachment 150 of the vehicle 100, such as an auger, a grapple, a sweeper, a hydraulic hammer, a boom, a fork, or the like. The hydraulic system 208 may include sensors 268 arranged to measure operating conditions associated with the hydraulic system 208, such as a power draw of the hydraulic system inverter 256, a power output of the hydraulic system inverter 256, a temperature of the hydraulic system motor 260, and/or the like. The sensors 268 may be communicatively connected to and/or integrated with the sensor system 236, and the memory 244 may store operating conditions 252 related to the values sensed by the sensors 268.

The traction control system 212 may include at least one inverter 272 arranged to power at least one motor 276 of the traction control system 212. The at least one traction control system inverter 272 may include, for example, at least one three-phase variable speed inverter. The at least one traction control system motor 276 may be arranged to control the traveling speed and direction of the electric utility vehicle 100. In that regard, the at least one traction control system motor 276 may be operatively connected to the ground engaging traction system 120 of FIG. 1. The traction control system 212 may include sensors 280 arranged to measure operating conditions associated with the traction control system 212, such as a power draw of each traction control system inverter 272, a power output of each traction control system inverter 272, a temperature of each traction control system motor 276, and/or the like. The sensors 280 may be communicatively connected to and/or integrated with the sensor system 236, and the memory 244 may store operating conditions 252 related to the values sensed by the sensors 280.

In some examples, such as the example shown in FIG. 2, the traction control system 212 includes two inverters 272a, 272b and two motors 276a, 276b. For example, the traction control system can include a right-side inverter 272a operatively connected to a right-side motor 276a for controlling the right-side traction control system 120a. The traction control system 212 can include a left-side inverter 272b operatively connected to a left-side motor 276b for controlling a left-side traction control system 120b. In such examples, the traction control system sensors 280 may include right-side sensors 280a and left-side sensors 280b. In some examples, the traction control system 212 includes at least four inverters 272. For example, the traction control system 212 may include at least two right-side inverters 272a and at least two left-side inverters 272b.

The embedded electronics 216 can include, for example, heating, ventilation, and air conditioning (HVAC) components, one or more voltage converters (e.g., direct current-direct current (DC-DC) voltage converters) for supplying power to other electrical equipment on the vehicle 100 (e.g., signal light(s), a horn, etc.), an anti-theft system, a telematics system, a GPS system, a lighting control system, one or more displays or other instrumentation, various high-voltage components, other electrically powered vehicle systems, and/or the like. In some examples, the embedded electronics 216 include electronic components unrelated to the powertrain system of the vehicle 100. The embedded electronics may include one or more sensors communicatively connected to or integrated with the sensor system 236 for measuring operating conditions associated with the embedded electronics 216, such as a current draw of the embedded electronics 216, a temperature of the embedded electronics 216, and/or the like.

The power distributor 220 may be electrically coupled to the hydraulic system inverter 256, each traction control system inverter 272, and the embedded electronics 216.

The operator station components 228 may include one or more components of the operator station 140. For example, the operator station components 228 may include one or more buttons, joysticks, a steering wheel, pedals, transmission inputs, hydraulics inputs, stabilizer inputs, or a combination thereof. In some examples, the operator station components 228 include remote operation components, such as a mobile computing device, fleet management computing devices, or other remotely located computing devices. The controller 232 may receive operator inputs via the operator station components 228 and control a power output of the battery 224 based at least in part on the received input. For example, the controller 232 may receive a request for power draw to the traction control system 212, the hydraulic system 208, the embedded electronics 216, or the like via the operator station components 228.

In some examples, in executing the current allocation instructions 248, the controller 232 can calculate an available battery current from the battery 224. Further, the controller 232 can set current consumption limits for the hydraulic system inverter 256 and/or the traction control system inverters 272 based on one or more operating conditions monitored or determined by the sensor system 236, sensors 268, sensors 280, and/or feedback from the BMS 204 in accordance with the current allocation instructions 248.

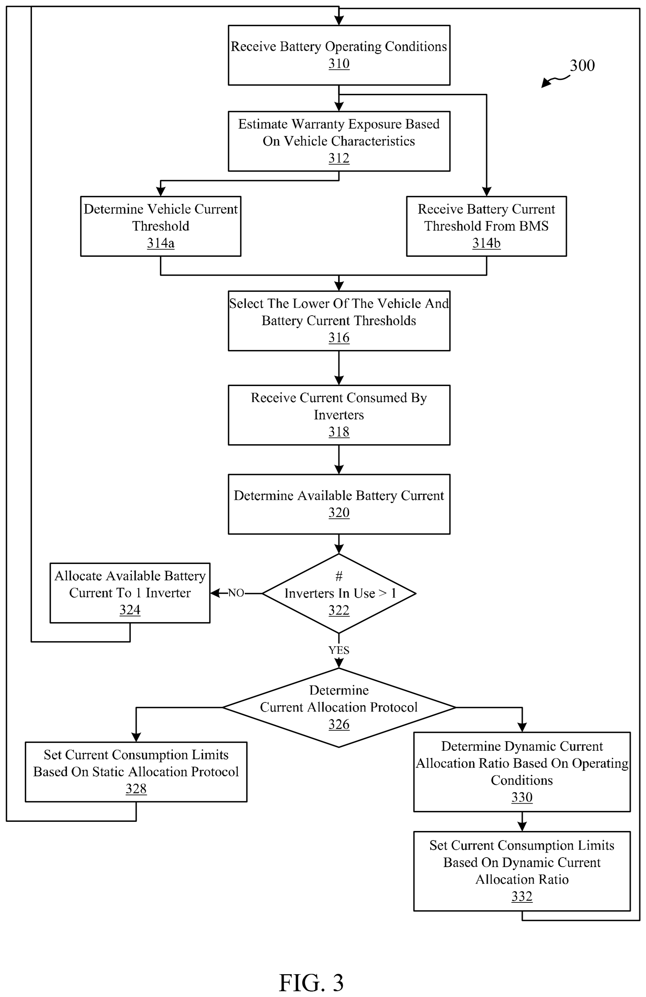

FIG. 3 illustrates a flow diagram of a current allocation method 300. Operations of the method 300 may be performed by, for example, the controller 232 in conjunction with other components of the vehicle 100.

At step 310, the controller 232 can receive a first set of operating conditions associated with the battery 224. The operating conditions can include, for example, the SOC value of the battery 224, the SOH value of the battery 224, a temperature value of the battery 224, a current draw value of the battery 224 or one or more components of the electric utility vehicle 100, or a combination thereof.

At step 312, the controller 232 can estimate the warranty exposure of the battery 224. In some examples, the controller 232 estimates the warranty exposure of the battery 224 based at least in part on the first set of operating conditions. In some examples, the controller 232 estimates the warranty exposure based at least in part on warranty information and/or pre-established battery lookup tables stored or accessed by the controller 232.

At step 314a, the controller 232 can determine a vehicle current threshold value based at least in part on warranty information and/or pre-established battery lookup tables.

At step 314b, the controller 232 can receive a BMS current threshold value from the BMS 204. In some examples, the BMS current threshold value can be a predetermined factory-set value with respect to the warranty of the BMS or battery 224.

At step 316, the controller 232 can select a total current consumption limit for the electric utility vehicle 100 as the lower value between the vehicle current threshold value and the current threshold value of the BMS 204. In some examples, one of step 314a or step 314b is omitted, and thus, step 316 is not necessary.

At step 318, the controller 232 may detect an active current draw by one or more of the hydraulic system inverter 256 and the traction control system inverters 272.

At step 320, the controller 232 can determine an available current of the battery 224 based at least in part on sensor data received from the sensors 268, the sensors 280, and/or other sensors of the vehicle 100. The controller 232 may determine the available current of the battery 224 based at least in part on a reserve current for the embedded electronics 216. The reserve current may be an electric current value corresponding to the maximum current that can be consumed by minimum core components of the vehicle 100 at a given time. In some examples, the minimum core components are a subset of the embedded electronics 216. In some examples, the minimum core components include all of the embedded electronics 216. In this manner, a reserve of current to power the minimum core components can be maintained when, for example, the electric utility vehicle 100 is performing other tasks (e.g., traveling, lifting a load, etc.). The controller 232 may further determine the available current of the battery 224 based at least in part on the active current draw of each of the hydraulic system inverter 256 and the traction control system inverters 272 (e.g., each of the at least one right-side inverter 272a and the at least one left-side inverter 272b). In that regard, the controller 232 can calculate the available battery current by subtracting the reserve current and the total active current drawn from the inverters 256, 272 from the total current consumption limit.

At step 322, the controller 232 may detect the number of inverters in active use by the vehicle 100. For example, only one inverter may be in use during certain operations, such as a lift operation in which only the hydraulic system inverter 256 is active. In other examples, only the traction control system inverters 272 or a portion thereof may be active during a drive operation. In other examples, all of the inverters (e.g., the hydraulic system inverter 256 and the traction control inverters 272) may be active.

At step 324, responsive to determining that only a single inverter is in active use, the controller 232 may allocate all of the available battery current up to the current consumption limit for the single in-use inverter.

At step 326, responsive to determining that two or more inverters are in active use, the controller 232 may select a current allocation protocol. In some examples, the controller 232 receives a selection for a preferred current allocation protocol as input received from the operator station components 228. The selection may be input locally at the vehicle 100 (e.g., through a button press, touch screen selection, etc.) or remotely from the vehicle 100 (e.g., through an application programming interface (API) call via a mobile or web-based application). In some examples, the controller 232 selects the current allocation protocol based on one or more operating conditions of the vehicle 100 and/or based on a default selection. In some examples, a current allocation protocol selected by the controller 232 can be overridden by operator input received via the operator station components 228. The current allocation protocol can be selected from at least a static current allocation protocol and a dynamic current allocation protocol.

At step 328, responsive to selecting the static current allocation protocol, the controller 232 allocates the available, unallocated battery current to the hydraulic system inverter 256 and to the traction control system inverters 272 according to a static ratio. As an example, the controller 232 may allocate one third of the available, unallocated current to the hydraulic system inverter 256 and two thirds of the available, unallocated current to the traction control system inverters 272. However, other ratios of current allocation between the hydraulic system 208 and the traction control system 212 are contemplated. In some forms, the controller 232 will allocate the available, unallocated current equally among all of the inverters in the vehicle 100 or equally among the combination of the inverters of the hydraulic system 208 and the inverters of the traction control system 212.

At step 330, responsive to selecting the dynamic current allocation protocol, the controller 232 determines a dynamic current allocation ratio for allocating current to respective inverters of the hydraulic system 208 and the traction control system 212 based at least in part on sensor data received from the sensor system 236, the sensors 268, the sensors 280, and/or other sensors of the vehicle 100. The controller 232 may determine the dynamic current allocation ratio based on operating parameters of the at least one utility attachment 150 of the vehicle 100, a derate status of one or more components of the vehicle 100, operating conditions of the BMS 204, and/or the like. In some examples, the controller 232 determines the dynamic current allocation ratio at least according to a power usage ratio between the hydraulic system inverter 256 and the traction control inverters 272. The controller 232 may determine the operating parameters based on signals received from the sensor system 236, the sensors 268, sensors 280, and/or other sensors included in the utility vehicle 100.

In some examples, the controller 232 determines the dynamic current allocation ratio at least according to a detected rate of change of current draw of each of the hydraulic system inverter 256 and the traction control system inverters 272. For example, the controller 232 may allocate more current to the traction control system inverters 272 responsive to determining that a rate of increase of power consumption by the traction control system inverters 272 is larger than that of the hydraulic system inverter 256. In some examples, the controller 232 determines the dynamic current allocation ratio based on the rate of change of power consumption only when the rate of change of power consumption for at least one inverter is above a threshold.

In some aspects, the controller 232 trains a predictive model (e.g., a machine learning model) based on relationships of the BMS operating conditions and determines the dynamic current allocation ratio using the model.

At step 332, the controller 232 sets the current consumption limits for each of the hydraulic system inverter 256 and the traction control system inverters 272 in accordance with the dynamic current allocation ratio. For example, the controller 232 can broadcast the current consumption limit values over a CAN bus to the hydraulic system 208 and the traction control system 212, along with operational commands, such as desired speed, causing the inverters 256 and 272 to operate according to the respective current consumption limits. In some examples, the controller 232 determines operational parameters (e.g., torque limits) for the motors 260 and 276 to enforce the current consumption limits, and outputs commands to the hydraulic system 208 and the traction control system 212 indicative of the operational parameters.

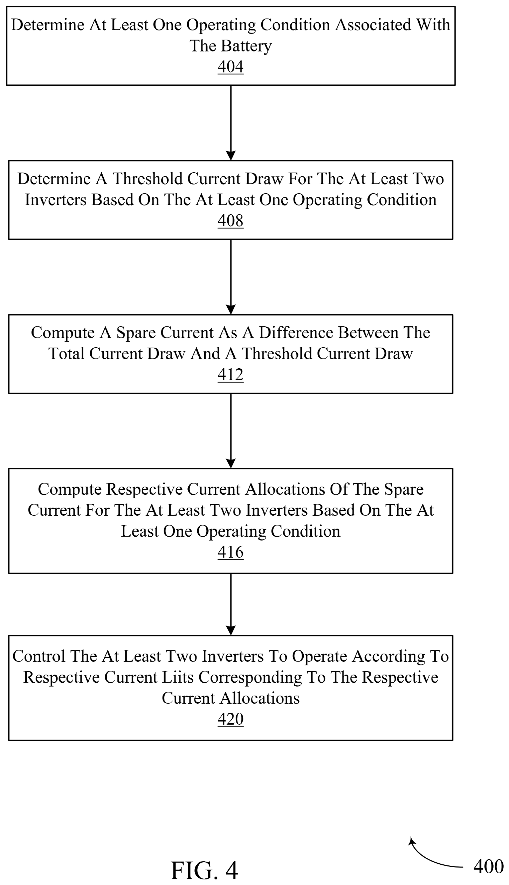

FIG. 4 illustrates a process 400 for enforcing current limits in an electric utility vehicle, according to some examples. Operations of the process 400 may be performed by, for example, the controller 232 in conjunction with other components of the vehicle 100.

At step 404, the process 400 includes determining at least one operating condition associated with the battery. For example, the controller 232 may determine at least one operating condition associated with the battery 224. In some examples, the at least one operating condition can include a total active current draw of the at least two inverters 256 and 272. In some examples, the at least one operating condition includes an SOC of the battery 224, a SOH of the battery 224 (e.g., an estimated capacity of the battery 224, an age of the battery 224, etc.), a temperature of the battery 224, a nominal maximum current draw rated for the battery 224, a reserve current for embedded electronics 216, respective current draws from each inverter 256 and 272, respective current outputs from each inverter 256 and 272, an operator-selected parameter, or a combination thereof.

The controller 232 can receive the operator-selected parameter via the operator station components 228. As an example, an operator-selected parameter can include a selected inverter or selected system to prioritize allocation of current. For example, the controller 232 may receive an operator selection to prioritize allocation of current to the traction control system inverters 272 over the hydraulic system inverter 256. In some examples, the controller 232 displays, via the operator station components 228, a slider bar, a percentage dialogue box, or other graphical user interface (GUI) element to receive an operator-selected ratio or priority of current allocation.

As another example, the operator-selected parameters can include an operator-selected maximum power output of the battery 224, an operator-selected maximum power output of the hydraulic system 208, and/or an operator-selected maximum power output of the traction control system 212. In this manner, an operator can control power output according to a comfort level (e.g., a new operator may prefer a lower total power output of one or more systems). Alternatively, the vehicle 100 may operate in an eco mode in which the maximum power output by the vehicle 100 is reduced.

At step 408, the process 400 includes determining a threshold current draw for the battery based on the at least one operating condition. For example, the controller 232 may determine a threshold current draw for the at least two inverters 256 and 272 based on a known capacity of the battery 224 and the reserve current for embedded electronics 216. In some examples, the capacity of the battery 224 used for calculating the threshold current is less than a nominally rated capacity of the battery.

At step 412, the process 400 includes computing a spare current as a difference between the total active current draw and a threshold current draw. For example, the controller 232 can compute a spare current of the battery 224 based on a difference between the total active current draw of the at least two inverters 256 and 272 and the threshold current draw using sensor data received from the sensor system 236, the sensors 268, and/or the sensors 280. In that regard, the controller 232 may compute the spare current of the battery 224 by subtracting the total active current draw of the at least two inverters 256 and 272 from the threshold current draw.

At step 416, the process 400 includes computing respective current allocations of the spare current for the at least two inverters based on the at least one operating condition. For example, the controller 232 can compute respective current allocations of the spare current for the at least two inverters 256 and 272 based on the at least one operating condition detected using the sensor system 236, the sensors 268, the sensors 280, and/or other sensors of the utility vehicle 100. The respective current allocations can correspond to current limits imposed on each of the at least two inverters 256 and 272. For example, a current limit for a given inverter can be defined as the active current draw by the given inverter plus the respective allocation of the spare current for the given inverter.

At step 420, the process 400 includes controlling the at least two inverters to operate according to respective current limits corresponding to the respective current allocations. For example, the controller 232 can broadcast commands to the at least two inverters 256 and 272 (e.g., over the CAN bus) to operate according to current limits associated with the respective current allocations.

In some examples, computing the respective current allocations includes computing a current allocation ratio indicative of a ratio of the spare current to be allocated to the at least one hydraulic system inverter 256 relative to the at least one traction control system inverter 272. For example, the respective current allocations can be computed as a function of the current allocation ratio and the spare current.

In some examples, the current allocation ratio is computed responsive to receiving a request to power one or more of the at least two inverters 256 and 272 (e.g., based on input received via the operator station components 228). In some examples, the request is such that if executed, the total current draw from the at least two inverters 256 and 272 would meet or exceed the threshold current draw. In such examples, the amount of power drawn by the at least two inverters 256 and 272 requires throttling relative to the requested amount of power. In other examples, the current allocation ratio is computed as part of a proportional-integral-derivative (PID) control loop.

In some examples, the current allocation ratio is a static ratio in which a larger amount of spare current is allocated to the at least one traction control system inverter 272 relative to the at least one hydraulic system inverter 256. The static ratio is proportional to the number of inverters 272 included in the traction control system 212. In some forms, the spare current can be divided equally among the total number of inverters of the traction control system 212 and the hydraulic system 208 combined.

In some examples, the current allocation ratio is a dynamic ratio. For example, the controller 232 can compute the dynamic ratio based on a ratio of actual current drawn by the at least one traction control system inverter 272 relative to the at least one hydraulic system inverter 256. Alternatively or in addition, the controller 232 can compute the dynamic ratio based on a rate of change of current drawn by the at least one traction control system inverter 272 relative to the at least one hydraulic system inverter 256. Alternatively or in addition, the controller 232 can compute the dynamic ratio based on a derate status of the at least one traction control system inverter 272 and/or the hydraulic system inverter 256. In some examples, the derate status is computed based on the at least one operating condition.

In some examples, the controller 232 stores a set of previous current draws from the at least two inverters 256 and 272 and a set of previous respective current allocations or current limits of the at least two inverters 256 and 272 (e.g., within a defined period of milliseconds, seconds, minutes, or the like). In such examples, the controller 232 can predict the rates of change of the current drawn by the at least two inverters 256 and 272 based on the set of previous current draws from the at least two inverters 256 and 272, the set of previous respective current allocations of the at least two inverters 256 and 272, and the respective active current draws of the at least two inverters 256 and 272.

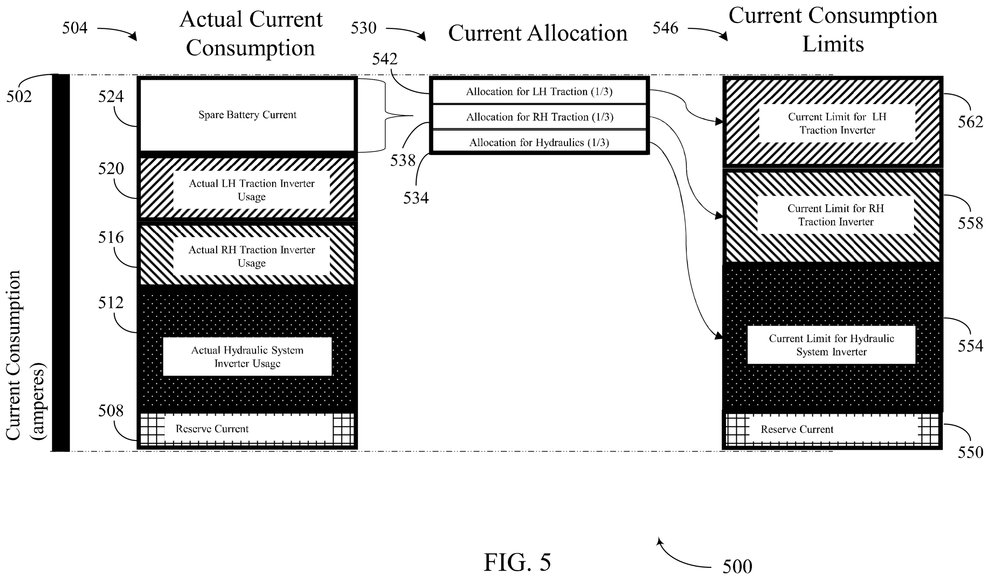

FIG. 5 is a current limit diagram 500 for components of the electric utility vehicle 100 under a static current allocation protocol, according to some examples. In the example of FIG. 5, the Y-axis represents current consumption in amperes and the upper bounding line 502 represents the total current consumption limit (e.g., calculated at step 316 of the method 300) or the total current capacity of the battery 224.

The diagram 500 includes an example actual current consumption 504 of the battery 224. As shown in the example of FIG. 5, the actual current consumption 504 includes a reserve current 508 for embedded electronics 216, an actual or active hydraulic system inverter usage 512 (e.g., corresponding to the hydraulic system inverter 256), an actual or active right-side or right-hand (RH) traction inverter usage 516 (e.g., corresponding to the right-side traction control system inverter 272a), an actual or active left-side or left-hand (LH) traction inverter usage 520 (e.g., corresponding to the left-side traction control system inverter 272b), and a spare or available battery current 524 corresponding to unallocated current of the battery 224.

The diagram 500 includes an example available or spare current allocation 530. Under the static allocation protocol (e.g., using static allocation ratios), the controller 232 may allocate a predefined amount of the spare current to each inverter 256 and 272 in active use. In the example of FIG. 5, an allocation 534 for the hydraulic system inverter 256 is 1/3 of the spare current 524, an allocation 538 for the right-side traction control system inverter 272a is 1/3 of the spare current 524, and an allocation 542 for the left-side traction control system inverter 272b is 1/3 of the spare current 524. However, the static allocation ratios may vary.

The diagram 500 further includes an example of current limits 546 set based on the spare current allocation 530. The current limits 546 may be imposed on the inverters 256 and 272 by the controller 232 (e.g., at step 324 and/or 328 of the method 300 or step 420 of the process 400). In the example shown, a current limit 550 for the embedded electronics 216 can correspond to the reserve current 508. A current limit 554 for the hydraulic system inverter 256 can correspond to the sum of the actual hydraulic system inverter usage 512 and the spare current allocation 534 for the hydraulic system inverter 256. A current limit 558 for the right-side traction control system inverter 272a can correspond to the sum of the actual right-side traction control system inverter usage 516 and the spare current allocation 538 for the right-side traction control system inverter 272a. A current limit 562 for the left-side traction control system inverter 272b can correspond to the sum of the actual left-side traction control system inverter usage 520 and the spare current allocation 542 for the left-side traction control system inverter 272b.

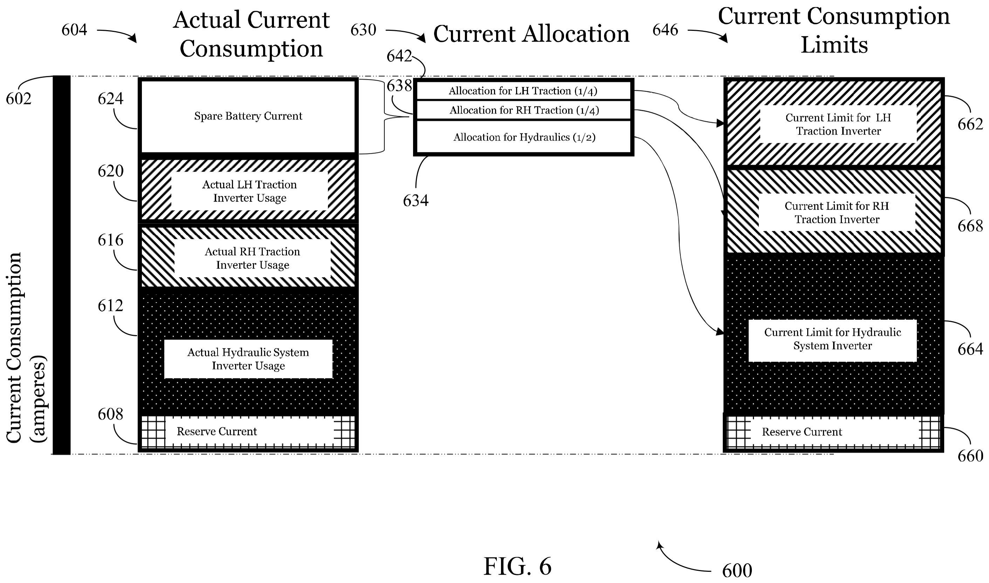

FIG. 6 is a current limit diagram 600 for components of the electric utility vehicle 100 under a dynamic current allocation protocol, according to some examples. In the example of FIG. 6, the Y-axis represents current consumption in amperes and the upper bounding line 602 represents the total current consumption limit (e.g., calculated at step 316 of the method 300) or the total current capacity of the battery 224.

The diagram 600 includes an example actual or active current consumption 604 of the battery 224. As shown in the example of FIG. 6, the actual current consumption 604 includes a reserve current 608 for embedded electronics 216, an actual or active hydraulic system inverter usage 612 (e.g., corresponding to the hydraulic system inverter 256), an actual or active right-side or right-hand (RH) traction inverter usage 616 (e.g., corresponding to the right-side traction control system inverter 272a), an actual or active left-side or left-hand (LH) traction inverter usage 620 (e.g., corresponding to the left-side traction control system inverter 272b), and a spare or available battery current 624 corresponding to unallocated current of the battery 224.

The diagram 600 includes an example available or spare current allocation 630. Under the dynamic allocation protocol (e.g., using dynamic allocation ratios), the controller 232 may allocate a varying or dynamic amount of the spare current to each inverter 256 and 272 in active use. In the example of FIG. 6, the spare current allocations 634-642 (e.g., the dynamic current allocation ratio) may be computed based on the ratios of actual current consumption 604 by the inverters 256 and 272. In some forms, current usage ratios are determined based on an instantaneous current consumption measurement. In some forms, the current usage ratios are determined based on a rolling average of instantaneous current use measurements over a specified interval of time.

As shown in the example of FIG. 6, the active hydraulic system inverter usage 612 is approximately twice the right-side traction control system inverter usage 616 and approximately twice the left-side traction control system inverter usage 620. In such examples, the controller 232 may select a dynamic allocation ratio such that the hydraulic system inverter 256 is allocated twice the amount of current as the right-side traction control system inverter 272a and the left-side traction control system inverter 272b. In that regard, in the example of FIG. 6, an allocation 634 for the hydraulic system inverter 256 is 1/2 of the spare current 624, an allocation 638 for the right-side traction control system inverter 272a is 1/4 of the spare current 624, and an allocation 642 for the left-side traction control system inverter 272b is 1/4 of the spare current 624. However, the dynamic allocation ratios may vary.

The diagram 600 includes an example of current limits 646 based on the spare current allocation 630. The current limits may be imposed on the inverters 256 and 272 by the controller 232 (e.g., at step 324 and/or 328 of the method 300 or step 420 of the process 400). In the example shown, a current limit 660 for the embedded electronics 216 can correspond to the reserve current 608. A current limit 664 for the hydraulic system inverter 256 can correspond to the sum of the actual hydraulic system inverter usage 612 and the spare current allocation 634 for the hydraulic system inverter 256. A current limit 668 for the right-side traction control system inverter 272a can correspond to the sum of the actual right-side traction control system inverter usage 616 and the spare current allocation 638 for the right-side traction control system inverter 272a. A current limit 662 for the left-side traction control system inverter 272b can correspond to the sum of the actual left-side traction control system inverter usage 620 and the spare current allocation 642 for the left-side traction control system inverter 272b.

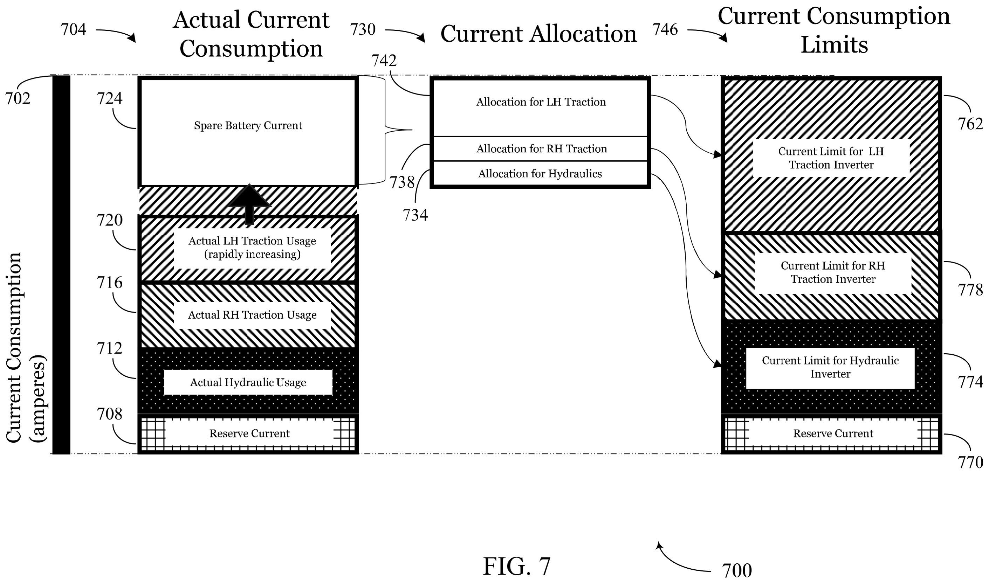

FIG. 7 is a current limit diagram 700 for components of the electric utility vehicle 100 under a dynamic current allocation protocol, according to some examples. In the example of FIG. 7, the Y-axis represents current consumption in amperes, and the upper bounding line 702 represents the total current consumption limit (e.g., calculated at step 316 of the method 300) or the total current capacity of the battery 224.

The diagram 700 includes an example of actual or active current consumption 704 of the battery 224. As shown in the example of FIG. 7, the actual current consumption 704 includes a reserve current 708 for embedded electronics 216, an actual or active hydraulic system inverter usage 712 (e.g., corresponding to the hydraulic system inverter 256), an actual or active right-side or righthand (RH) traction inverter usage 716 (e.g., corresponding to the right-side traction control system inverter 272a), an actual or active left-side or lefthand (LH) traction inverter usage 720 (e.g., corresponding to the left-side traction control system inverter 272b), and a spare or available battery current 724 corresponding to unallocated current of the battery 224.

The diagram 700 includes an example of available or spare current allocation 730. Under the dynamic allocation protocol (e.g., using dynamic allocation ratios), the controller 232 may allocate a varying or dynamic amount of the spare current to each inverter 256 and 272 in active use. In the example of FIG. 7, the spare current allocations 734-742 (e.g., the dynamic current allocation ratio) may be computed based on the rates of change of actual current consumption 704 by the inverters 256 and 272. For example, the controller 232 can determine the rate of change of current usage change for each of the inverters 256 and 272, in addition to the real-time current consumption values, by storing the real-time current consumption values logged during a preceding time interval, such as the prior 6 milliseconds or the like. In some examples, a PID control can be implemented to provide feedback to the controller 232 regarding the rate of change of current consumption

In some examples, the controller 232 establishes a rate of change threshold for determining whether to modify a dynamic allocation ratio. In such examples, responsive to the rate of change of current consumption for all of the inverters 256 and 272 being below the rate of change threshold, the controller 232 can default to selecting the dynamic current allocation ratio based on the ratio of actual usage between the inverters 256 and 272 as described above with respect to FIG. 6. Responsive to the rate of change of current consumption for at least one inverter of the inverters 256 and 272 meeting or exceeding the rate of change threshold, the controller 232 can allocate a greater ratio of spare current to the inverter for which the rate of change of current consumption is at or above the rate of change threshold.

In the example of FIG. 7, the ratio of the actual current usages 712, 716, and 720 of the inverters 256 and 272 are about one-third each (e.g., 1:1:1). However, the rate of change of current usage 720 by the left-side traction control system inverter 272b is high (e.g., above the rate of change threshold). Accordingly, the controller 232 may select a dynamic allocation ratio proportional to the rate of change of current usage 720. For example, an allocation 734 for the hydraulic system inverter 256 is 1/4 of the spare current 724, an allocation 738 for the right-side traction control system inverter 272a is 1/4 of the spare current 724, and an allocation 742 for the left-side traction control system inverter 272b is 1/2 of the spare current 724. In this manner, the dynamic current allocation protocol can distribute available battery current based on multiple parameters of the overall system to preserve the integrity and warranty of the battery 224 and improve system performance.

The diagram 700 includes an example of current limits 746 based on the spare current allocation 730. The current limits may be imposed on the inverters 256 and 272 by the controller 232 (e.g., at step 324 and/or 328 of the method 300 or step 420 of the process 400). In the example shown, a current limit 770 for the embedded electronics 216 can correspond to the reserve current 708. A current limit 774 for the hydraulic system inverter 256 can correspond to the sum of the actual hydraulic system inverter usage 712 and the spare current allocation 734 for the hydraulic system inverter 256. A current limit 778 for the right-side traction control system inverter 272a can correspond to the sum of the actual right-side traction control system inverter usage 716 and the spare current allocation 738 for the right-side traction control system inverter 272a. A current limit 762 for the left-side traction control system inverter 272b can correspond to the sum of the actual left-side traction control system inverter usage 720 and the spare current allocation 742 for the left-side traction control system inverter 272b.

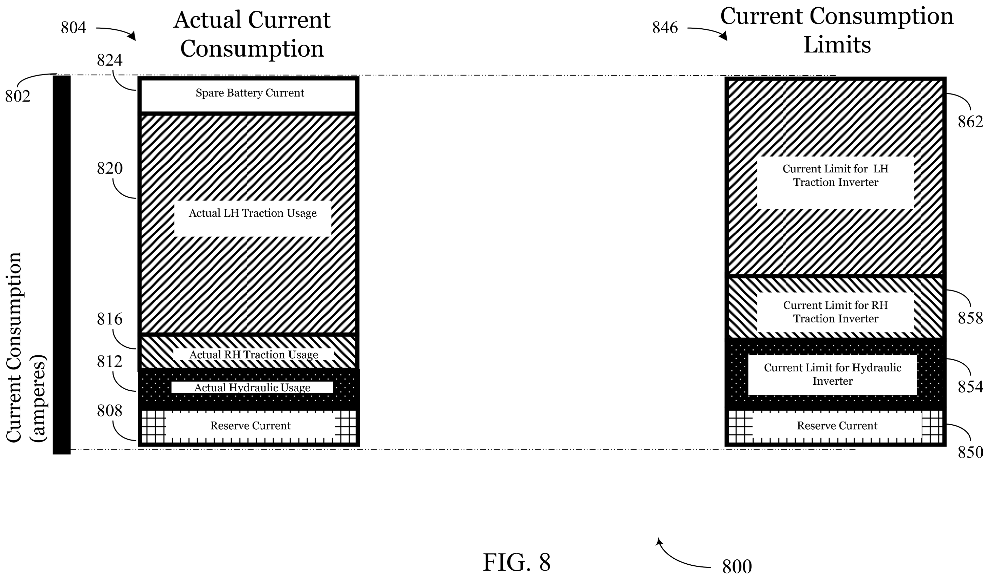

FIG. 8 is a current limit diagram 800 for components of the electric utility vehicle 100 under a dynamic current allocation protocol, according to some examples. In the example of FIG. 8, the Y-axis represents current consumption in amperes and the upper bounding line 802 represents the total current consumption limit (e.g., calculated at step 316 of the method 300) or the total current capacity of the battery 224.

The diagram 800 includes an example of an actual or active current consumption 804 of the battery 224. As shown in the example of FIG. 8, the actual current consumption 804 includes a reserve current 808 for embedded electronics 216, an actual or active hydraulic system inverter usage 812 (e.g., corresponding to the hydraulic system inverter 256), an actual or active right-side or righthand (RH) traction inverter usage 816 (e.g., corresponding to the right-side traction control system inverter 272a), an actual or active left-side or lefthand (LH) traction inverter usage 820 (e.g., corresponding to the left-side traction control system inverter 272b), and a spare or available battery current 824 corresponding to unallocated current of the battery 224.

In some examples, the controller 232 modifies the dynamic current allocation ratio as the amount of spare current 824 decreases. For example, the controller 232 may initially set a current consumption limit for each of the inverters 256 and 272 that is above each of the real-time current usages 812-820 of the inverters 256 and 272. In such circumstances, each of the inverters 256 and 272 would be able to consume more current than is actively being consumed (e.g., spare current 824 remains available). However, in instances where the spare current 824 is unavailable or less than a threshold, the dynamic current allocation protocol can gradually shift toward allocating current to achieve a predefined current consumption limit ratio that is unrelated to real-time current usages 812-820 or rates of change via a tuned gain.

In the example of FIG. 8, the controller 232 may allocate one fifth of the non-reserve current to the hydraulic system inverter 256, one fifth of the non-reserve current to the right-side traction control system inverter 272a, and three fifths of the non-reserve current to the left-side traction control system inverter 272b. Example current consumption limits 846 are shown in FIG. 8 based on this allocation scheme. In that regard, a current limit 850 for the embedded electronics 216 can correspond to the reserve current 808. A current limit 854 for the hydraulic system inverter 256 can correspond to three fifths of the capacity 802 less the reserve current 808. A current limit 858 for the right-side traction control system inverter 272a can correspond to one fifth of the capacity 802 less the reserve current 808. A current limit 862 for the left-side traction control system inverter 272b can correspond to one fifth of the capacity 802 less the reserve current 808. However, the allocation ratios may vary in practice.

As shown, the current allocation ratios imposed by the controller 232 can result in a forced reduction in current consumption of one or more inverters, such as the left-side traction control system inverter 272b in the example of FIG. 8. In some examples, the controller 232 uses a filtered channel to smooth the transition of the imposed current limit such that a throttled inverter does not abruptly slow down.

In the foregoing specification, various examples have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of the present teachings. The benefits, advantages, solutions to problems, and any element(s) that may cause any benefit, advantage, or solution to occur or become more pronounced are not to be construed as critical, required, or essential features or elements of any or all the claims.

Moreover, in this document, relational terms such as first and second, top and bottom, and the like may be used to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element preceded by "comprises ...a," "has ...a," "includes ...a," "contains ...a" does not, without more constraints, preclude the existence of additional identical elements in the process, method, article, or apparatus that comprises, has, includes, contains the element. Unless the context of their usage unambiguously indicates otherwise, the articles "a," "an," and "the" should not be interpreted as meaning "one" or "only one." Rather, these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

Also, it should be understood that the illustrated components, unless explicitly described to the contrary, may be combined or divided into separate software, firmware, and/or hardware. For example, instead of being located within and performed by a single electronic processor, logic and processing described herein may be distributed among multiple electronic processors. Similarly, one or more memory modules and communication channels or networks may be used even if examples described or illustrated herein have a single such device or element. Also, regardless of how they are combined or divided, hardware and software components may be located on the same computing device or may be distributed among multiple different devices. Accordingly, in this description and in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

It will be appreciated that some examples may be comprised of one or more generic or specialized processors (or "processing devices") such as microprocessors, digital signal processors, customized processors, and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application-specific integrated circuits (ASICs), in which each function or some combinations of certain of the functions are implemented as custom logic. Of course, a combination of the two approaches could be used.

Moreover, an example can be implemented as a computer-readable storage medium having computer-readable code stored thereon for programming a computer (e.g., comprising a processor) to perform a method as described and claimed herein. Any suitable computer-usable or computer-readable medium may be utilized. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory), and a Flash memory. In the context of this document, a computer-usable or computer-readable medium may be any medium that can contain, store, communicate, propagate, or transport the program for use by or in connection with the instruction execution system, apparatus, or device.

A device or structure that is "configured" in a certain way is configured in at least that way, but may also be configured in ways that are not listed.

The terms "coupled," "coupling" or "connected" as used herein can have several different meanings depending on the context in which these terms are used. For example, the terms coupled, coupling, or connected can have a mechanical or electrical connotation. For example, as used herein, the terms coupled, coupling, or connected can indicate that two elements or devices are directly connected to one another or connected to one another through intermediate elements or devices via an electrical element, electrical signal or a mechanical element depending on the particular context.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separately claimed subject matter.

## Claims

1. An electric utility vehicle (100) comprising:
at least two inverters (272) arranged to provide power to respective motors;
a battery (224) arranged to provide power to the at least two inverters (272); and
a controller (232) communicatively connected to the battery (224) and the at least two inverters (272), the controller (232) designed to:
determine at least one operating condition associated with the battery (224), the at least one operating condition including a total active current draw of the at least two inverters (272);
determine a threshold current draw for the at least two inverters (272) based on the at least one operating condition;
compute a spare current (824) (724) (624) (524) as a difference between the total active current draw and a threshold current draw;
compute respective current allocations of the spare current (824) (724) (624) (524) for the at least two inverters (272) based on the at least one operating condition; and
control the at least two inverters (272) to operate according to respective current limits (746) (646) (546) corresponding to the respective current allocations.

2. The vehicle of claim 1, wherein the controller is further designed to:
determine, based on the at least one operating condition, that at least a first inverter of the at least two inverters is not in active use; and
maximize allocation of the spare current to others of the at least two inverters.

3. The vehicle of claim 1, wherein the at least one operating condition further includes a state of charge (SOC) of the battery, a state of health (SOH) of the battery, a temperature of the battery, a nominal maximum current draw rated for the battery, a reserve current for embedded electronics, respective current draws from each inverter, respective current outputs from each inverter, an operator selection to prioritize allocation to a selected inverter of the at least two inverters, an operator-selected maximum power output, or a combination thereof.

4. The vehicle of claim 1, wherein the current allocations are computed based on a static ratio in which the spare current is allocated equally to the at least two inverters.

5. The vehicle of claim 1, wherein the at least two inverters include at least one hydraulic system inverter and at least one traction control system inverter.

6. The vehicle of claim 5, wherein the controller is further designed to:
compute a current allocation ratio indicative of a ratio of the spare current to be allocated to the at least one hydraulic system inverter relative to the at least one traction control system inverter; and
compute the respective current allocations according to the spare current and the current allocation ratio.

7. The vehicle of claim 6, wherein the controller is further designed to:
compute the current allocation ratio responsive to receiving a request to power the at least two inverters.

8. The vehicle of claim 6, wherein the controller is further designed to:
compute the current allocation ratio as part of a proportional-integral-derivative loop.

9. The vehicle of claim 6, wherein the current allocation ratio is a dynamic ratio computed based on:
a ratio of actual current drawn by a first inverter of the at least two inverters relative to a second inverter of the at least two inverters,
a rate of change of current drawn by the first inverter relative to the second inverter,
a derate status of the first inverter or the second inverter based on the at least one operating condition,
or a combination thereof.

10. The vehicle of claim 1, wherein the controller is further designed to:
store a set of previous current draws from the at least two inverters and a set of previous respective current allocations of the at least two inverters; and
predict rates of change of current drawn by the at least two inverters based on the set of previous current draws from the at least two inverters, the set of previous respective current allocations of the at least two inverters, and respective active current draws of the at least two inverters.

11. The vehicle of claim 1, wherein the at least two inverters include at least one hydraulic system inverter and at least two traction control system inverters.

12. The vehicle of claim 1, wherein the controller is further designed to:
estimate a warranty exposure of the battery based at least in part on the at least one operating condition; and
compute the respective current allocations of the spare current for the at least two inverters based on the warranty exposure.

13. The vehicle of claim 1, wherein the controller is further designed to:
reduce an actual current draw of one or more of the at least two inverters if the actual current draw is above the respective current limit after the respective current allocations are computed.

14. The vehicle of claim 1, wherein the controller is further designed to:
compute the respective current allocations based on a current allocation protocol selected by an operator.

15. The vehicle of claim 14, wherein the current allocation protocol is one of a static allocation protocol in which the spare current is allocated equally to the at least two inverters or a dynamic allocation protocol in which the spare current is allocated based on a ratio of actual current drawn by a first inverter of the at least two inverters relative to a second inverter of the at least two inverters.
